# EUROPÄISCHE PATENTSCHRIFT

(11) **EP 2 191 132 B1**
(45) Veröffentlichungstag und Bekanntmachung des Hinweises auf die Patenterteilung: **04.04.2018**
(21) Anmeldenummer: 08804136.3
(22) Anmeldetag: 12.09.2008
(51) Int. Cl.: B64G 1/40, F03H 1/00, C09K 5/14, H01J 23/033, B64G 1/50

(54) **IONENBESCHLEUNIGERANORDNUNG MIT EINER VORRICHTUNG ZUR ABLEITUNG VON VERLUSTWÄRME**
ION ACCELERATOR ARRANGEMENT COMPRISING A DEVICE FOR DISSIPATING LOST HEAT
DISPOSITIF ACCÉLÉRATEUR D'IONS COMPRENANT UN DISPOSITIF DE DISSIPATION DES PERTES DE CHALEUR

(30) Priorität: 14.09.2007 DE 102007043954; 21.12.2007 DE 102007062150
(43) Veröffentlichungstag der Anmeldung: 02.06.2010
(73) Patentinhaber: Thales Electronic Systems GmbH, 89077 Ulm (DE)
(72) Erfinder: HARMANN, Hans-Peter, 89077 Ulm (DE); KOCH, Norbert, 89073 Ulm (DE); CLAGES, Mathias, 89278 Nersingen (DE)
(74) Vertreter: Baur & Weber Patentanwälte PartG mbB
(86) Internationale Anmeldenummer: PCT/EP2008/062173
(87) Internationale Veröffentlichungsnummer: WO 2009/037203

(56) Entgegenhaltungen:
- EP-A- 1 180 783
- WO-A-03/000550
- DE-B- 1 244 680
- DE-C1- 19 948 229
- DE-T2- 69 621 411
- DE-T2- 69 914 987
- US-A- 5 990 600
- US-B1- 6 382 502
- DAVID M JACOBSON ET AL: "A Novel Lightweight Microwave Packaging Technology" IEEE TRANSACTIONS ON COMPONENTS, PACKAGING ANDMANUFACTURING TECHNOLOGY: PART A, IEEE SERVICE CENTER, PISCATAWAY, NJ, US, Bd. 21, Nr. 3, 1. September 1998 (1998-09-01), XP011011112 ISSN: 1070-9886
- "MSFC-398 Material Properties Data Sheet" NASA MSFC, [Online] April 2001 (2001-04), XP007908872 Gefunden im Internet: URL:http://techtran.msfc.nasa.gov/tech_ops /nasa398alloy.pdf> [gefunden am 2009-06-15]
- KHAYMS V ET AL: "Design of a miniaturized Hall thruster for microsatellites", 32ND JOINT PROPULSION CONFERENCE AND EXHIBIT, JOINT PROPULSION CONFERENCES; JULY 1 - 3, 1996, LAKE BUENA VISTA, FL, USA, AIAA, US, no. AIAA 96-3291, 1 July 1996 (1996-07-01) , pages 1-7, XP008178918, DOI: 10.2514/6.1996-3291
- J M Coey: "Rare-earth iron permanent magnets" In: "Rare-earth iron permanent magnets", 1 January 1996 (1996-01-01), Oxford University Press Inc. New York, XP55248151, ISBN: 978-0-19-851792-4 page 457,

## Beschreibung

Die Erfindung betrifft eine Ionenbeschleunigeranordnung.

Ionenbeschlauniger sind als elektrische Antriebe für Satelliten oder andere Raumflugkörper bekannt Ein vorteilhafter solcher Ionenbeschleuniger-Antrieb ist z. B. in der WO 2003/000550 A1 beschrieben. Der bekannte Ionenbeschleuniger enthält eine mehrstufige Magnetanordnung mit Permanentmagnetringen und Polschuhringen, welche eine Kammerwand einer Ionisationskammer umgeben.

Beim Betrieb von derartigen Ionenbeschleunigeranordnungen entsteht an der die Ionisationskammer seitlich begrenzenden Kammerwand Verlustwärme, welche nach außen abgeführt werden muss. Aufgrund von Volumen- und Gewichtsbeschränkungen im Einsatz in Flugkörpern und durch den Einsatz von Hochspannungen in solchen Ionenbeschleunigeranordnungen bestehen besondere Anforderungen an Vorrichtungen zur Ableitung von Verlustwärme, welche insbesondere beim Einsatz in Raumflugkörpern nur durch Abstrahlung in den freien Raum als Wärmesenke abgegeben werden kann und hierzu zumindest teilweise von der Kammerwand über die Magnetanordnung abgeführt wird. Dabei ist die Temperaturbelastbarkeit der Magnetanordnung insbesondere bei Verwendung von Permanentmagneten begrenzt.

In der DE 696 21 411 T2 ist eine Iononquelle mit geschlossener Elektronendrift beschrieben, welche als Antrieb in einem Raumflugkörper geeignet ist. Die Ionenquelle enthält eine ringförmige Ionisationskammer, in welcher ein Arbeitsgas, typischerweise Xenon, einleitbar ist und in welcher das Arbeitsgas ionisiert wird. Die Ionisationskammer umgibt eine innere Magnetanordnung und ist von einer äußeren Magnetanordnung umgeben. Die Magnetanordnungen enthalten jeweils getrennte Magnetspulen und Magnetstücke. Zwischen die die Ionisationskammer begrenzenden Kammerwände und die radial von diesen beabstandeten Magnetspulen sind thermische Abschirmungen eingefügt, welche eine übermäßige Erhitzung der Polstücke und der Spulen verhindern.

Die EP 1 180 783 A2 beschreibt eine Ionenquelle, bei welcher in einer Ionisationskammer Elektronen erzeugt werden, welche ein eingeleitetes Arbeitsgas ionisieren. Ein ringförmiger Magnetkörper umgibt die Ionisationskammer und weist zwei radial nach innen ragende Polstücke auf, welche über zwei mit Magnetspulen bestückte bogenförmige Joche verbunden sind. An den der Ionisationskammer zuweisenden Flächen der Polstücke sind Hitzeschilde befestigt.

Bei einer Ionenbeschleuniger-Anordnung mit einer eine Verlustwärmequelle enthaltenden Ionisationskammer und mit einer die Ionisationskammer umgebenden Magnetanordnung sind Material, Geometrie und Aufbau der Magnetanordnung in der Regel weitgehend durch die Funktionsweise des Ionenbeschleunigers vorgegeben.

Der vorliegenden Erfindung liegt die Aufgabe zugrunde, eine Ionenbeschleunigeranordnung mit einer verbesserten Abführung von Verlustwärme anzugeben.

Die Erfindung ist in dem unabhängigen Patentanspruch beschrieben. Die abhängigen Ansprüche enthalten vorteilhafte Ausgestaltungen und Weiterbildungen der Erfindung.

Im Sinne der nachfolgenden Ausführungen ist die Verlustwärmequelle durch die Ionisationskammer der Ionenbeschleunigeranordnung, die Trägerstruktur durch die Magnetanordnung der Ionenbeschleunigeranordnung gebildet.

Bei einer Vorrichtung zur Ableitung von Verlustwärmeleistung von einer Verlustwärmequelle, insbesondere in einer der genannten elektrischen Einrichtungen, über eine Wärmeleitanordnung, welche mit einer der Verlustwärmequelle zugewandten Trägerstruktur wärmeleitend verbunden ist, zu einer Wärmesenke erweist sich die Verwendung einer Aluminium-Silizium-Legierung in der Wärmeleitanordnung überraschend als besonders vorteilhaft. Die Wärmeleitanordnung besteht vorteilhafterweise überwiegend, vorzugsweise vollständig aus der Al-Si-Logierung.

Insbesondere ist die Verwendung einer Al-Si-Legierung mit einem hypereutektischen Anteil von Si von besonderem Vorteil. Der Wärmeausdehnungskoeffizient der Al-Si-Legierung weicht vorteilhafterweise um weniger als 30 %, insbesondere weniger als 20 %, vorzugsweise um weniger als 10 % von dem Wärmeausdehnungskoeffizient der Trägerstruktur ab. Dabei wird vorteilhafterweise von der Erkenntnis Gebrauch gemacht, dass der Wärmeausdehnungskoeffizient einer hypereutektischen Al-Si-Legierung bei Variation der Anteile von Al und Si in der Legierung über einen großen Bereich einstellbar und dadurch an einen durch das Material der Trägerstruktur vorgegebenen Wärmeausdehnungskoeffizienten gut anpassbar ist.

Die Wärmeleiteranordnung ist vorteilhafterweise in einer die Trägerstruktur umgebenden Form ausgeführt. Die Trägeranordnung umgibt vorteilhafterweise einen die Verlustwärmequelle enthaltenden Raum bezüglich einer Längsachse umlaufend seitlich. Die Wärmeleitanordnung liegt vorteilhafterweise unter elastischer Verspannung an der Trägerstruktur an, wodurch sich ein dauerhafter und großflächiger Wärmeübergang an der Grenzfläche zwischen der Trägerstruktur und der Wärmeleitanordnung ergibt. Ein Anliegen der Wärmeleitanordnung an der Trägerstruktur unter elastischer Verspannung kann insbesondere durch Wärmeaufschrumpfen der Wärmeleiteranordnung auf die Trägerstruktur hergestellt werden. Die Wärmeleiteranordnung kann insbesondere auch vorteilhafterweise eine mechanische Verbindung mehrerer Teile der Trägerstruktur bilden.

Vorteilhaft für einen guten Wärmeübergang zwischen der Trägerstruktur und der Wärmeleitung ist auch, einer Grenzfläche zwischen der Trägerstruktur eine dünnere Schicht von typischerweise weniger als 1 mm, insbesondere weniger als 0,1 mm vorzusehen, welche aus einem Material mit höherer Duktilität als die Materialien der Trägerstruktur und der Wärmeleitanordnung besteht. Vorteilhaft ist insbesondere die Verwendung von Gold für eine solche Zwischenschicht. Die Trägerstruktur und die Wärmeleitanordnung können auch miteinander verlötet sein.

Die Trägeranordnung enthält vorteilhafterweise eine Magnetanordnung, insbesondere eine Magnetanordnung mit Permanentmagnetkörpern. Das Material einer solchen Permanentmagnetanordnung ist vorzugsweise eine SeltenerdLegierung, insbesondere Samarium-Kobalt SmCo. Die Permanentmagnetanordnung enthält vorteilhafterweise wenigstens einen, vorzugsweise mehrere Ringmagnetkörper mit bezüglich der Ringachse axial gerichteter Magnetisierung.

In anderer vorteilhafter Ausführung kann anstelle einer AlSi-Legierung die Wärmeleitanordnung auch zumindest überwiegend aus Beryllium bestehen, welches gleichfalls einen vorteilhaften Wärmeausdehnungskoeffizienten und ein geringes spezifisches Gewicht besitzt, allerdings teurer und schwieriger in der Handhabung ist.

Die Herstellung einer Permanentmagnetanordnung mit mehreren axial aufeinander folgend angeordneten Ringmagnetkörpern ist auch unabhängig vom Material der Wärmeleitanordnung durch thermisches Aufschrumpfen der Wärmeleitanordnung von besonderem Vorteil, da hierdurch ein Zusammenhalt der mehreren Ringmagnetkörper auf einfache und vorteilhafte Art erzielt wird und/oder insbesondere bruchgefährdete Magnetkörper, wie z. B. solche aus SmCo durch die allseitig gleichmäßige Druckbelastung stabilisiert und geschützt werden. Wenn keine Verlustwärme abgeführt werden muss, ist die Wärmeleitfähigkeit der Wärmeleitanordnung, welche dann primär eine mechanische Hülle ist, nachrangig.

Eine derartige Vorrichtung zur Ableitung von Verlustwärme ist insbesondere von Vorteil bei Verlustwärme erzeugenden elektrischen Einrichtungen in Raumflugkörpern, wo wegen fehlender Reparturmöglichkeit ein dauerhaft guter Wärmeübergang von besonderer Wichtigkeit ist und wogegen der großen Temperaturunterschiede zwischen Stillstand und Betrieb der elektrischen Einheiten Materialverbindungen besonders beansprucht sind. Bei der besonders vorteilhaften Verwendung einer Wärmeleitanordnung aus einer Al-Si-Legierung in einem Raumflugkörper leitet die Wärmeleitanordnung die über die Trägerstruktur aufgenommene Wärme vorteilhafterweise an eine Strahleranordnung weiter, welche die Wärme als Wärmestrahlung an den umgebenden Weltraum als Wärmesenke abgibt.

Bei einer Ionenbeschleunigeranordnung mit einer Magnetanordnung zeigt sich überraschend, dass eine Legierung aus Aluminium und Silizium mit einem hypereutektischen Anteil von Silizium als Material für zumindest den überwiegenden Teil der Wärmeleitanordnung besonders vorteilhaft auf die typischen, durch die Funktion der Ionenbeschleunigeranordnung vorgegebenen magnetisierbaren Materialien der Magnetanordnung abstimmbar sind. Der Anteil von Silizium an der hypereutektischen Al-Si-Legierung beträgt vorzugsweise wenigstens 40 %. Vorteilhafterweise beträgt der Anteil von Si an der Legierung maximal 60 %. Bei einer eutektischen Al-Si-Legierung liegt der Si-Anteil bei ca. 12 %.

Die hypereutektische Al-Si-Legierung besitzt vorteilhafterweise ein gegenüber den Materialien der Magnetanordnung höheres Wärmeleitvermögen und ein geringeres spezifisches Gewicht und ist durch ihre Materialeigenschaften mit besonders günstiger Wärmeübertragung mechanisch an Oberflächen von typischen Materialien der Magnetanordnung der Ionenbeschleunigeranordnung koppelbar. Insbesondere besitzt die hypereutektische Al-Si-Legierung einen Wärmeausdehnungskoeffizienten, der dem von in den typischen Magnetanordnungen bevorzugt eingesetzten magnetisierbaren Materialien, insbesondere Eisen als weichmagnetisches Material oder Seltenerdmaterialien, vorzugsweise SmCo, als permanentmagnetische Materialien sehr nahe kommt. Eine geringe Abweichung der Wärmeausdehnungskoeffizienten ist von wesentlichem Vorteil, da bei einer Ionenbeschleunigeranordnung der genannten Art hohe Temperaturschwankungen auftreten können.

Magnetisierbare Materialien typischer Trägerstrukturen, insbesondere Fe und SmCo, besitzen in vorteilhafter Ausführung einen Wärmeausdehnungskoeffizienten zwischen 8x10⁻⁶/K und 16x10⁻⁶/K, insbesondere zwischen 11x10⁻⁶/K und 13x10⁻⁶/K. Der Wärmeausdehnungskoeffizient der in der Wärmeleitanordnung erfindungsgemäß vorgesehenen hypereutektischen Al-Si-Legierung kann vorteilhafterweise durch das prozentuale Verhältnis von Al und Si noch variiert und an die Materialien der Magnetanordnung angepasst werden. Der Wärmeausdehnungskoeffizient der hypereutektischen Al-Si-Legierung weicht vorteilhafterweise um weniger als 30%, insbesondere weniger als 20%, vorzugsweise weniger als 10% von den jeweiligen Ausdehnungskoeffizienten der Materialien der Magnetanordnung ab.

Die Wärmeleitanordnung umgibt in vorteilhafter Ausführung die Magnetanordnung radial bezüglich einer Mittelachse der Ionenbeschleunigeranordnung und ist vorzugsweise unter elastischer Verspannung der Materialien auf die Magnetanordnung oder Teile derselben aufgeschrumpft, so dass die Wärmeleitanordnung und die Magnetanordnung unter elastischer Vorspannung mit gutem Flächenkontakt aneinander anliegen. An den Grenzflächen können in vorteilhafter Ausführung Zwischenschichten aus einem gut wärmeleitenden und gegenüber den Materialien von Magnetanordnung und Wärmeleitanordnung weicherem Material, beispielsweise Gold, vorgesehen sein, wodurch sich ein besonders guter Wärmeübergang durch eine durch Verformung der Zwischenschicht besonders große Kontaktfläche ergibt.

Die Wärmeleitanordnung gibt Wärme vorteilhafterweise über der Magnetanordnung abgewandte Oberflächenbereiche einer mit der Wärmeleitanordnung gekoppelten Strahleranordnung als Wärmestrahlung in die Umgebung ab, bei bevorzugtem Einsatz der Ionenbeschleunigeranordnung in einem Raumflugkörper insbesondere in den umgebenden leeren Raum. Die die Wärmestrahlung an die Umgebung abstrahlenden Oberflächen können aus einem von der hypereutektischen Al-Si-Legierung verschiedenen Material bestehen und insbesondere durch Beschichtungen gegeben sein.

Die Wärmeleitanordnung besteht vorteilhafterweise zumindest überwiegend (>50 %), vorzugsweise im wesentlichen, z. B. mit Ausnahme einer Oberflächenbeschichtung, vollständig aus der hypereutektischen Al-Si-Legierung. Vorzugsweise besteht auch die Strahleranordnung überwiegend oder im wesentlichen vollständig aus der hypereutektischen AlSi-Legierung.

Die Ionenbeschleunigeranordnung enthält eine Ionisationskammer, wobei eine Verlustwärmequelle an oder bei einer die Kammer begrenzenden, typischerweise dielektrischen, z.B. keramischen Kammerwand angeordnet ist. In der Ionisationskammer wird ein Arbeitsgas ionisiert wird und Ionen werden vorzugsweise elektrostatisch in einer Längsrichtung der Ionisationskammer beschleunigt und durch eine einseitige Öffnung der Kammer ausgestoßen.

Die Magnetanordnung enthält mehrere die Ionisationskammer der Ionenbeschleunigeranordnung umgebende Permanentmagnetringe, die in einer Längsrichtung der Kammer voneinander beabstandet sind. In bevorzugter Ausführung weisen in Längsrichtung benachbarte Permanentmagnetringe entgegen gesetzte Polausrichtungen in Längsrichtung auf, so dass in Längsrichtung gleichsinnige Pole benachbarter Magnetringe einander zuweisen. Hierdurch entsteht in der Kammer in Längsrichtung zwischen benachbarten Magnetringen eine Cusp-Struktur des Magnetfeldes, wie sie z. B. bei einem Ionenbeschleuniger aus der bereits eingangs genannten WO 2003/000550 A1 beschrieben ist. Eine mehrstufige Magnetanordnung mit wenigstens zwei in Längsrichtung beabstandeten solchen Cusp-Strukturen des Magnetfelds in der Ionisationskammer eines elektrostatischen Ionenbeschleunigers ist besonders vorteilhaft. Das Material der Permanentmagnetringe ist vorzugsweise eine Seltenerdlegierung, insbesondere mit Hauptbestandteilen Samarium und Kobalt. Samarium-Kobalt-Permanentmagnete sind bekannt und gebräuchlich und zeichnen sich durch eine gegenüber Neodym-Magneten höhere Curie-Temperatur aus.

Vorteilhafterweise sind zwischen in Längsrichtung beabstandeten Permanentmagnetringen Polschuhringe aus weichmagnetischem Material, insbesondere Eisen angeordnet.

Die anfallende Verlustwärme ist insbesondere für die Permanentmagnetmaterialien problematisch, für die keine hohen Temperaturen zulässig sind, und welche andererseits in der Regel eine geringe Wärmeleitfähigkeit besitzen und daher selbst nur einen geringen Beitrag zur Ableitung von Verlustwärme an die Wärmeleitanordnung beitragen können.

Die Permanentmagnetkörper der Magnetanordnung liegen typischerweise nicht unmittelbar an der äußeren Fläche der die Kammer seitlich begrenzenden Kammerwand an, sondern sind von dieser durch einen engen Spalt beabstandet, so dass ein Übergang der Verlustwärme von der Kammerwand auf die Permanentmagnetkörper durch Wärmestrahlung erfolgt. Durch eine Wärmestrahlungs-Reflektoreinrichtung zwischen Kammerwand und Permanentmagnetkörpern wird ein solcher Wärmeübergang verringert und eine Überhitzung der Permanentmagnetmaterials vermieden. Eine solche Wärmestrahlungs-Reflektoreinrichtung kann radial zwischen der äußeren Kammerwand und den Permanentmagnetkörpern angeordnete Spiegelkörper enthalten. Vorzugsweise ist die Wärmestrahlungs-Reflektoreinrichtung durch eine reflektierende Beschichtung der der Kammerwand zugewandten Flächen der Permanentmagnetkörper gebildet, wobei vorteilhafterweise Gold als Beschichtungsmaterial eingesetzt sein kann. vorteilhafterweise ist radial zwischen der äußeren Kammerwand und den dieser zuweisenden Flächen von weichmagnetischen Polschuhen keine Wärmestrahlungs-Reflektoreinrichtung gegeben, so dass über die vorzugsweise aus Eisen bestehenden und nicht temperaturempfindlichen, zugleich gut wärmeleitenden Polschuhe Verlustwärme nach außen zu der Wärmeleitanordnung abgeleitet wird. Die Verringerung der Wärmeaufnahme der Permanentmagnetkörper mittels der Wärmestrahlungs-Reflektoreinrichtung ist auch unabhängig vom Material der Wärmeleitanordnung vorteilhaft für den Überhitzungsschutz der Permanentmagnetkörper und die Verteilung der anfallenden Verlustwärme.

Die Erfindung ist nachfolgend anhand bevorzugter Ausführungsbeispiele unter Bezugnahme auf die Abbildung noch eingehend veranschaulicht. Dabei zeigt:

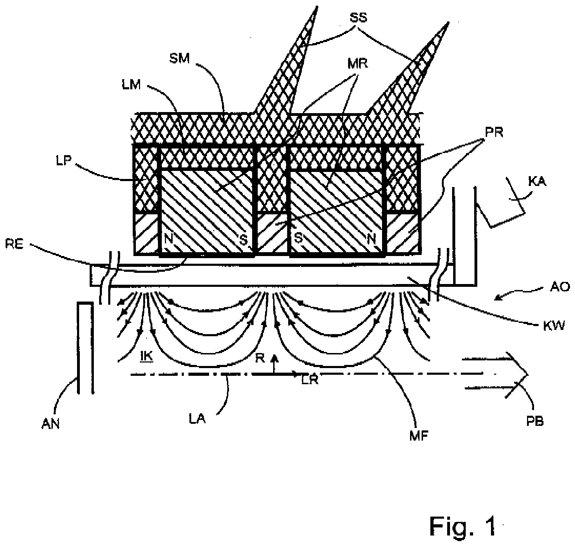

- Fig. 1: einen schematischen Aufbau eines Ionenbeschleunigers,

Fig. 1 zeigt schematisch und ausschnittsweise einen Schnitt durch eine Ionenbeschleunigeranordnung, welche ohne Beschränkung der Allgemeinheit als rotationssymmetrisch um eine Längsachse LA angenommen sei. Wegen der Symmetrie ist lediglich eine Hälfte des Schnittbildes oberhalb der Längachse LA dargestellt. Die Längsachse LA verläuft parallel zu einer Längsrichtung LR, welche zusammen mit der Radius-Koordinate R mit eingezeichnet ist. Eine Ionisationskammer IK ist von einer Kammerwand KW aus dielektrischem, insbesondere keramischem Material in radialer Richtung begrenzt. Der Kammerquerschnitt sei als in Längsrichtung LR konstant angenommen. Die Ionisationskammer ist in Längsrichtung nach einer Seite, in der Skizze nach rechts offen und ermöglicht dort das Austreten eines beschleunigten Plasmastrahls PB, welcher in einer als Raumflugkörper-Antriebseinrichtung eingesetzten Ionenbeschleunigeranordnung den Antriebsschub liefert. Der Strahlaustrittsöffnung AO in Längsrichtung entgegen gesetzt ist am Fuß der Ionisationskammer IK eine Anodenanordnung AN angeordnet. Im Bereich der Strahlaustrittsöffnung AO, vorzugsweise seitlich gegen diese versetzt, ist eine Kathodenanordnung KA angeordnet. Beim Betrieb der Anordnung liegt eine Hochspannung zwischen der Kathodenanordnung KA und der Anodenanordnung AN, welche in der Ionisationskammer ein in Längsrichtung LR weisendes elektrisches Feld erzeugt, welches Elektronen in Richtung der Anodenanordnung zu beschleunigen sucht und durch Ionisation des Arbeitsgases entstandene positive Ionen in Richtung der Strahlaustrittsöffnung AO beschleunigt.

Außerhalb der Plasmakammer und diese umgebend ist eine Magnetanordnung, welche Permanentmagnetkörper MR, insbesondere aus SmCo und in Längsrichtung neben und zwischen diesen Polschuhkörper PR enthält. Die Permanentmagnetkörper MR und die Polschuhkörper PR sind vorzugsweise jeweils ringförmig bezüglich der Längsachse LA ausgeführt. Es können aber auch mehrere Einzelkörper um die Achse gruppiert sein. Die Pole der Magnetkörper sind in Längsrichtung ausgerichtet und in Längsrichtung benachbarte Magnetkörper besitzen eine zueinander entgegen gesetzte Polung, so dass sich gleiche Pole, in der Fig. 1 zwei Südpole S beabstandet gegenüber stehen. Diese Art der Anordnung von Permanentmagnetkörper bewirkt in der Ionisationskammer IK ein Magnetfeld MF, welches im Bereich der Pole der Magnetkörper sogenannte Cusp-Strukturen ausbildet, d. h. Bereiche, in welchen die Feldlinien von der Längsachse LA zur Kammerwand KW hin gekrümmt in einen annähernd radialen Magnetfeldlinienverlauf übergehen. Durch die Polschuhkörper PR kann der Verlauf dieses Feldes vorteilhaft in eine für die Funktion der Ionenbeschleunigeranordnung weiter verbesserte Form gebracht werden.

Aufbau und Funktion einer derartigen Ionenbeschleunigeranordnung sind an sich, beispielsweise aus dem eingangs genannten Stand der Technik, bekannt. Bei einer derartigen Ionenbeschleunigeranordnung ist zwar gegenüber den bekannten Hall-Ionenbeschleunigern die Wärmebelastung der Kammerwand bereits reduziert, es verbleibt aber immer noch ein Verlustwärmeeintrag auf die der Ionisationskammer zuweisende Fläche der Kammerwand durch auf diese auftreffende Elektronen und Ionen und durch Strahlung aus dem sich in der Ionisationskammer ausbildenden Plasma, wobei der Wärmeeintrag auf die Kammerwand im Längsbereich der Polschuhkörper PR gegenüber den die Magnetkörper MR erfassenden Längsbereichen etwas erhöht ist. Durch die Erhitzung der Kammerwand wird auch von der radial nach außen weisenden Seite der Kammerwand Wärme in Richtung der Magnetanordnung abgestrahlt. Und über die Magnetanordnung radial nach außen transportiert und in den umgebenden Weltraum abgestrahlt, wofür eine Strahleranordnung vorteilhafterweise großflächige Strahlerstrukturen SS besitzt.

Eine Wärmeabführeinrichtung enthält im skizzierten vorteilhaften Beispiel eine radial außen liegende Strahleranordnung mit einem Mantel SM und den bereits genannten Strahlerstrukturen SS einerseits und eine zwischen der Strahleranordnung und der Magnetanordnung liegende Wärmeleitanordnung andererseits. Wenigstens die Wärmeleitanordnung besteht zumindest überwiegend aus der hypereutektischen AlSi-Legierung. Die Wärmeleitanordnung enthält mehrere Ringkörper LM, LP als Wärmeleitkörper, wobei die Ringkörper LP im Längsbereich der Polschuhkörper PR und die Wärmeleitkörper LM im Bereich der Permanentmagnetkörper MR angeordnet und jeweils mit den Polschuhkörpern PR bzw. den Permanentmagnetkörpern MR mechanisch und wärmeleitend gekoppelt sind. Diese Wärmeleitkörper und/oder die Strahleranordnung SM, SS bestehen vorteilhafterweise zumindest überwiegend aus einer hypereutektischen Al-Si-Legierung mit einem Anteil von Silizium von vorteilhafterweise wenigstens 40 %. Der Anteil von Silizium an der hypereutektischen Al-Si-Legierung beträgt vorteilhafterweise höchstens 60 %. Weitere Beimischungen in geringen Anteilen sind prinzipiell möglich.

Mit der hypereutektischen Al-Si-Legierung für die Wärmeleitkörper kann für diese ein Wärmeausdehnungskoeffizient erreicht werden, welcher sehr nahe an dem von Eisen oder von SmCo liegt. Die Wärmeleitkörper LP und LM sind vorzugsweise als geschlossene Ringkörper ausgeführt. Die Wärmeleitkörper liegen vorzugsweise radial verspannt an den nach außen weisenden Flächen der Polschuhkörper PR bzw. Permanentmagnetkörper MR an, um eine dauerhaft mechanisch stabile Flächenanlage zu erzielen und einen guten Wärmeübergang in radialer Richtung zu gewährleisten. An den Grenzflächen der Wärmeleitkörper LP zu den Polschuhkörpern PR bzw. der Wärmeleitkörper LM zu den Permanentmagnetkörpern MR können vorteilhafterweise Zwischenschichten aus einem gut wärmeleitendem Material, welches weicher ist als die sich gegenüber stehenden Materialien der Wärmeleitkörper und der Polschuhkörper bzw. Permanentmagnetkörper, eingefügt sein. Eine solche Zwischenschicht ergibt durch eine vergrößerte Kontaktfläche einen weiter verbesserten Wärmeübergang radial nach außen. Besonders vorteilhaft ist die Verwendung von Gold für solche Zwischenschichten. Eine derartige Zwischenschicht kann auch zwischen der Strahleranordnung mit dem Strahlermantel SM und der Wärmeleitanordnung mit den Wärmeleitkörpern LP, LM vorgesehen sein. Vorteilhafterweise erfolgt der Aufbau der Magnetanordnung mit der Wärmeabführeinrichtung in der Weise, dass die Polschuhkörper PR mit den Wärmeleitkörpern LP und die Permanentmagnetkörper MR mit den Wärmeleitkörpern LM verbunden und danach die so verbundenen ringförmigen Anordnungen in axialer Richtung zusammen gesetzt und starr miteinander verbunden werden. Danach wird vorteilhafterweise die Außenseite der durch die Wärmeleitkörper LP, LM gebildeten Wärmeleitanordnung geglättet und auf ein definiertes Außenmaß gebracht. Danach wird vorteilhafterweise die Strahleranordnung auf eine gegenüber der Wärmeleitanordnung erhöhte Temperatur gebracht, wobei sie sich aufweitet, und in Längsrichtung über die Wärmeleitanordnung geschoben. Beim Abkühlen der Strahleranordnung und dem damit verbundenen Schrumpfen legt sich die Strahleranordnung radial verspannt an die Außenseite der Wärmeleitanordnung, wodurch sich wieder ein guter Wärmeleitkontakt ergibt.

Die der Kammerwand KW radial zuweisenden Oberflächen der Permanentmagnetkörper MR sind mit einer Beschichtung RE als Reflektoreinrichtung versehen, welche das Absorptionsvermögen für Wärmestrahlung und damit die Wärmeübertragung von der Kammerwand auf die Permanentmagnetkörper verringert. Die Beschichtung besteht vorteilhafterweise aus Gold. Die Beschichtung erstreckt sich nicht auf die der Kammerwand zugewandten Flächen der Polschuhkörper, ist also in Längsrichtung bei den Polschuhkörpern unterbrochen.

Beim Betrieb der Ionenbeschleunigeranordnung wird die Kammerwand erhitzt und strahlt Wärme radial nach außen in Richtung der Magnetanordnung. Die von der Magnetanordnung aufgenommene Wärme wird entsprechend einem radialen Temperaturgradienten über die Permanentmagnetkörper MR, die Polschuhkörper PR und die Wärmeleitanordnung mit Wärmeleitkörpern LP, LM zu dem Mantel SM der Strahleranordnung transportiert und dort insbesondere über die Strahlerstrukturen SS als Wärmestrahlung in den Weltraum abgegeben.

Aufgrund der relativ geringen Wärmeleitfähigkeit der Permanentmagnetkörper MR, beispielsweise aus SmCo, findet trotz der in Längsrichtung geringeren Ausdehnung der radiale Wärmetransport hauptsächlich über die Polschuhkörper PR, insbesondere aus Eisen bestehend, statt. Die Verteilung der Anteile an der radialen Wärmeleitung innerhalb der Magnetanordnung korrespondiert dabei günstig mit der in den Längsbereichen der Polschuhkörper höheren Wandtemperatur durch höheren Wärmeeintrag an diesen Längspositionen. Die Wärmestrahlungs-Reflektoreinrichtung ist vorteilhafterweise in Längsrichtung in den Längsbereichen der Polschuhkörper unterbrochen und nur in den Längsbereichen der Permanentmagnetkörper vorhanden. Ein guter Wärmeübergang von der Kammerwand zu den vorzugsweise aus Eisen bestehenden Polschuhkörpern ist für die radiale Wärmeableitung von Vorteil.

Durch die Reflektoreinrichtung an den der Kammerwand zugewandten Flächen der Permanentmagnetkörper kann die Temperatur der Kammerwand in den Längsbereichen der Permanentmagnetkörper höher liegen als in den Längsbereichen der Polschuhkörper. In begrenztem Umfang kann ein Wärmeausgleich in Längsrichtung durch Wärmeleitung innerhalb das Materials der Kammerwand stattfinden. Insbesondere führt aber die höhere Kammerwandtempetatur auch zu einer erhöhten Wärmeabstrahlung in die Ionisationskammer, wodurch die verringerte Abstrahlung radial nach außen wieder teilweise kompensiert wird.

Die Reflektoreinrichtung an der Verlustwärmequelle zugewandten Flächen der Magnetanordnung kann vorteilhafterweise auch bei einer Magnetanordnung einer Wanderfeldröhrenanordnung vorgesehen sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere ist bei der Iononbeschleunigeranordnung die Reflektoreinrichtung auch unabhängig von der Al-Si-Materialwahl vorteilhaft realisierbar.

## Patentansprüche

1. Ionenbeschleuniger-Anordnung in einem Raumflugkörper mit einer eine Verlustwärmequelle enthaltenden Ionisationskammer (IK) und einer diese umgebenden Magnetanordnungen (MR), wobei zumindest zwischen einem Teil der der Kammerwand (KW) der Ionisationskammer (IK) zuweisenden und von dieser beabstandeten Oberflächen der Magnetanordnungen (MR) eine Wärmestrahlungs-Reflektoreinrichtung (RE) angeordnet ist, wobei die Magnetanordnung (MR) wenigstens einen Permanentmagnetkörper enthält, eine Wärmeleitanordnung (LM) wärmeleitend und mechanisch fest mit der Magnetanordnung (MR) verbunden ist und gegenüber dieser eine höhere Wärmeleitfähigkeit besitzt, die Magnetanordnung (MR) mehrere die Ionisationskammer umgebende Permanentmagnetringe enthält, welche in einer Längsrichtung (LR) der Ionisationskammer voneinander beabstandet sind, zwischen in Längsrichtung (LR) benachbarte Permanentmagnetringe (MR) Polschuhringe (PR) aus weichmagnetischem Material eingefügt sind und die Wärmestrahlungs-Reflektoreinrichtung (RE) in Längsabschnitten bei den Polschuhen (PR) unterbrochen ist.

2. Anordnung nach Anspruch 1, **dadurch gekennzeichnet, dass** die Wärmeleitanordnung (LM) ein geringes spezifisches Gewicht als die Magnetanordnung (MR) aufweist.

3. Anordnung nach Anspruch 1 oder 2, **dadurch gekennzeichnet, dass** die Wärmeleitanordnung (LM) zumindest überwiegend aus einer Aluminium-Silizium-Legierung mit einem hypereutektischen Anteil von Silizium besteht.

4. Anordnung nach Anspruch 3, **dadurch gekennzeichnet, dass** der Anteil von Silizium wenigstens 30 %, insbesondere wenigstens 40 % beträgt.

5. Anordnung nach Anspruch 3 oder 4, **dadurch gekennzeichnet, dass** der Anteil von Silizium höchstens 60 % beträgt.

6. Anordnung nach einem der Ansprüche 1 bis 5 **dadurch gekennzeichnet, dass** die Wärmeleitanordnung (LM) die Magnetanordnung (MR) umgibt und radial gegen diese verspannt ist.

7. Anordnung nach Anspruch 6, **dadurch gekennzeichnet, dass** die Wärmeleitanordnung (LM) auf die Magnetanordnung (MR) aufgeschrumpft ist.

8. Anordnung nach einem der Ansprüche 1 bis 7, **dadurch gekennzeichnet, dass** das Material der Magnetanordnung (MR) einen Wärmeausdehnungskoeffizienten zwischen 8x10⁻⁶/K und 16x10⁻⁶/K besitzt.

9. Anordnung nach einem der Ansprüche 1 bis 8, **dadurch gekennzeichnet, dass** in Längsrichtung (LR) der Ionisationskammer (IK) benachbarte Permanentmagnetringe (MR) in Längsrichtung entgegen gesetzt ausgerichtete Polungen aufweisen.

10. Anordnung nach einem der Ansprüche 1 bis 9, **dadurch gekennzeichnet, dass** die Wärmeleitanordnung (LM) mit einer Strahleranordnung (SM) gekoppelt ist, welche Wärme durch Strahlung in die Umgebung abgibt.

11. Anordnung nach einem der Ansprüche 1 bis 10, **dadurch gekennzeichnet, dass** die Wärmestrahlungs-Reflektoreinrichtung (RE) auf Oberflächen von Permanentmagnetmaterialen vorliegt.

12. Anordnung nach einem der Ansprüche 1 bis 11, **dadurch gekennzeichnet, dass** die Wärmestrahlungs-Reflektoreinrichtung (RE) durch eine reflektierende Beschichtung auf der Magnetanordnung (MR) gebildet ist.

## Claims

1. Ion accelerator arrangement in a spacecraft, comprising an ionization chamber (IK) containing a lost heat source and comprising a magnet arrangements (MR) surrounding said chamber, wherein a heat radiation reflector device (RE) is disposed at least between a part of the surfaces of the magnet arrangements (MR) that face the chamber wall (KW) of the ionization chamber (IK) and are spaced apart from it, wherein the magnet arrangement (MR) contains at least one permanent magnet body, a heat conducting arrangement (LM) is connected in a heat-conducting and mechanically fixed manner to the magnet arrangement (MR) and has a higher thermal conductivity than said arrangement, the magnet arrangement (MR) contains a number of permanent magnet rings surrounding the ionization chamber, which are spaced apart from one another in a longitudinal direction (LR) of the ionization chamber, pole shoe rings (PR) of magnetically soft material are inserted between permanent magnet rings (MR) that are adjacent in the longitudinal direction (LR) and the radiation reflector device (RE) is interrupted at the pole shoes (PR) in longitudinal sections.

2. Arrangement according to Claim 1, **characterized in that** the heat conducting arrangement (LM) has a low relative density than the magnet arrangement (MR).

3. Arrangement according to Claim 1 or 2, **characterized in that** the heat conducting arrangement (LM) consists at least predominantly of an aluminium-silicon alloy with a hypereutectic proportion of silicon.

4. Arrangement according to Claim 3, **characterized in that** the proportion of silicon is at least 30%, in particular at least 40%.

5. Arrangement according to Claim 3 or 4, **characterized in that** the proportion of silicon is at most 60%.

6. Arrangement according to one of Claims 1 to 5, **characterized in that** the heat conducting arrangement (LM) surrounds the magnet arrangement (MR) and is braced radially against it.

7. Arrangement according to Claim 6, **characterized in that** the heat conducting arrangement (LM) is shrink-fitted on the magnet arrangement (MR).

8. Arrangement according to one of Claims 1 to 7, **characterized in that** the material of the magnet arrangement (MR) has a coefficient of thermal expansion of between 8x10⁻⁶/K and 16x10⁻⁶/K.

9. Arrangement according to one of Claims 1 to 8, **characterized in that** permanent magnet rings (MR) that are adjacent in the longitudinal direction (LR) of the ionization chamber (IK) have opposing polarities in the longitudinal direction.

10. Arrangement according to one of Claims 1 to 9, **characterized in that** the heat conducting arrangement (LM) is coupled to a radiator arrangement (SM), which emits heat into the surroundings by radiation.

11. Arrangement according to one of Claims 1 to 10, **characterized in that** the heat radiation reflector device (RE) is on surfaces of permanent magnet materials.

12. Arrangement according to one of Claims 1 to 11, **characterized in that** the heat radiation reflector device (RE) is formed by a reflective coating on the magnet arrangement (MR).

## Revendications

1. Arrangement accélérateur d'ions dans un engin spatial, comprenant une chambre d'ionisation (IK) qui contient une source de chaleur dissipée et un arrangements d'aimants (MR) qui entoure celle-ci, un dispositif réflecteur de rayonnement thermique (RE) étant disposé au moins entre une partie de l'arrangements d'aimants (MR) faisant face à la paroi de chambre (KW) de la chambre d'ionisation (IK) et les surfaces espacées de celle-ci,
l'arrangement d'aimants (MR) contenant au moins un corps à magnétisme permanent,
un arrangement conducteur de chaleur (LM) étant relié de manière thermoconductrice et mécaniquement à demeure à l'arrangement d'aimants (MR) et possédant une conductivité thermique supérieure à celui-ci,
l'arrangement d'aimants (MR) contenant plusieurs anneaux à magnétisme permanent qui entourent la chambre d'ionisation, lesquels sont espacés les uns des autres dans une direction longitudinale (LR) de la chambre d'ionisation, des anneaux de pièce polaire (PR) en un matériau magnétique doux étant insérés entre des anneaux à magnétisme permanent (MR) voisins dans la direction longitudinale (LR) et le dispositif réflecteur de rayonnement thermique (RE) étant interrompu en portions longitudinales au niveau des pièces polaires (PR).

2. Arrangement selon la revendication 1, **caractérisé en ce que** l'arrangement conducteur de chaleur (LM) possède un poids spécifique faible que celui de l'arrangement d'aimants (MR).

3. Arrangement selon la revendication 1 ou 2, **caractérisé en ce que** l'arrangement conducteur de chaleur (LM) se compose au moins majoritairement d'un alliage d'aluminium et de silicium avec une part hypereutectique de silicium.

4. Arrangement selon la revendication 3, **caractérisé en ce que** la part de silicium est d'au moins 30 %, notamment d'au moins 40 %.

5. Arrangement selon la revendication 3 ou 4, **caractérisé en ce que** la part de silicium est au maximum de 60 %.

6. Arrangement selon l'une des revendications 1 à 5, **caractérisé en ce que** l'arrangement conducteur de chaleur (LM) entoure l'arrangement d'aimants (MR) et est serré dans le sens radial contre celui-ci.

7. Arrangement selon la revendication 6, **caractérisé en ce que** l'arrangement conducteur de chaleur (LM) est emmanché à chaud sur l'arrangement d'aimants (MR).

8. Arrangement selon l'une des revendications 1 à 7, **caractérisé en ce que** le matériau de l'arrangement d'aimants (MR) possède un coefficient de dilatation thermique entre 8x10⁻⁶/K et 16x10⁻⁶/K.

9. Arrangement selon l'une des revendications 1 à 8, **caractérisé en ce que** les anneaux à magnétisme permanent (MR) voisins dans la direction longitudinale (LR) de la chambre d'ionisation (IK) présentent des polarités orientées en sens inverse dans la direction longitudinale.

10. Arrangement selon l'une des revendications 1 à 9, **caractérisé en ce que** l'arrangement conducteur de chaleur (LM) est couplé à un arrangement rayonnant (SM) qui délivre de la chaleur dans l'environnement par rayonnement.

11. Arrangement selon l'une des revendications 1 à 10, **caractérisé en ce que** le dispositif réflecteur de rayonnement thermique (RE) se trouve sur des surfaces des matériaux à magnétisme permanent.

12. Arrangement selon l'une des revendications 1 à 11, **caractérisé en ce que** le dispositif réflecteur de rayonnement thermique (RE) est formé par un revêtement réfléchissant sur l'arrangement d'aimants (MR).
